# EUROPEAN PATENT SPECIFICATION

(11) **EP 3 938 688 B1**
(45) Date of publication and mention of the grant of the patent: **11.12.2024**
(21) Application number: 20815897.2
(22) Date of filing: 30.10.2020
(51) Int. Cl.: F16K 31/385, E03B 7/07

(54) **LIQUID PRESSURE REDUCING VALVE**
FLÜSSIGKEITSDRUCKMINDERUNGSVENTIL
SOUPAPE DE RÉDUCTION DE PRESSION DE LIQUIDE

(30) Priority: 04.11.2019 GB 201916022
(43) Date of publication of application: 19.01.2022
(73) Proprietor: Polymer Technologies Limited, Channel Islands, JE3 9DA (JE)
(72) Inventor: TAYLOR, David, Portsmouth Hampshire PO6 3UF (GB)
(74) Representative: Schlich
(86) International application number: PCT/GB2020/052750
(87) International publication number: WO 2021/089986

(56) References cited:
- EP-A1- 1 762 922
- WO-A2-03/057998
- GB-A- 2 165 372
- GB-A- 2 176 316

## Description

The present invention relates to a fluid pressure reducing valve apparatus, particularly though not exclusively for water mains.

Loss of water from mains is a problem due to the age of mains pipework and damage to mains and associated equipment. Many mains are old and have multiple leaks. Even newer mains can suffer leaks. Leak flow is greatest when the water pressure is highest, unsurprisingly. However, I have noted a simple correlation between on the one hand pressure required downstream of a regulator to maintain a given minimum pressure at a remote point of a local network, the regulator being between a high pressure regional supply and the local network, and on the other hand flow in the local network. Both the required regulated pressure and the flow on the downstream side of the regulator appear to be normally linearly related. Despite this I am aware of no pressure regulators controlled in accordance with flow through them, except for the following.

In the prior proposal of GB 2,176,316, there was disclosed, in terms of its ab stract:
*Apparatus for controlling the flow of water through a pipe (26) including a valve (29) and an orifice plate (37) and supplying a water distribution system comprises a governor (1) actuating a pilot valve (14) in a servo system controlling the valve (29). The governor (1) has two diaphragms (5) and 6) linked by a tension spring (7) the extension of which is determined by the rate of flow through the orifice plate (37). The first diaphragm (5) operates a valve member (13) of the pilot valve (14) and is subjected to the differential pressure caused by flow through the orifice plate (37). The second diaphragm (6) is loaded by a compression spring (8) and its displacement is dependent upon the control pressure at a tapping (38) in the pipe (26).; The movement of the valve member (14) is the combination of the displacements of the two diaphragms (5 and 6), and raises the control pressure at tapping (38) when demand for water increases.*

WO 03/057998 (Optimus Water Technologies Ltd) discloses a water pressure reducing assembly. The apparatus of WO 03/057998 comprises a water-pressure reducing valve, a differential control valve, a filter unit, a flow restriction orifice and a pilot valve. A motor drive is connected to the differential control valve but not to the water-pressure reducing valve.

The object of the present invention is to provide an improved liquid pressure reducing valve
According to the invention there is provided a fluid pressure reducing valve apparatus comprising:
- a spring loaded pressure reducing valve having:
   - a body containing a chamber,
   - a liquid supply orifice into the chamber and a liquid outlet from the chamber,
   - a regulation plate opposed to the orifice and subject in use to supply liquid acting on it,
   - a spring acting to urge the plate towards to the orifice and
   - a diaphragm between the regulation plate and the body to close the chamber between them and subject in use to regulated pressure in the chamber; and
   - a flow meter downstream of the outlet;
   characterised in that the apparatus further comprises:
   - a controllable motor drive acting between the body and an end of the spring remote from the regulation plate, and
   - a controller arranged to receive flow data from the flow meter and to control the controllable motor drive for withdrawal of the remote end of the spring in accordance with flow rate measured by the flow meter;
the arrangement being such that in use for increase in demand flow, the regulation plate is partially withdrawn to maintain downstream pressure on such increase and vice versa.

Preferably the controllable motor drive is a servo motor drive.

The invention is particularly applicable to water mains, where the fluid is liquid, in particular water. It is envisaged that the invention will be applicable to hydrocarbons fluids, both liquid and gaseous.

The controller can be adapted for calculation of the server motor action in spring positioning in accordance with a substantially linear downstream pressure and flow rate relationship. The calculation can be based on pressure to be achieved in terms of servo positioning of the spring; or on servo positioning of the spring alone. Alternatively, it can be adapted for servo motor action in accordance with a lookup table of downstream pressure and flow rate. Again, the lookup table can include values of pressure to be achieved, but is preferably includes spring positions in terms of servo revolutions.

Particular embodiments of the invention are as set forth in the dependent claims appended hereto.

To help understanding of the invention, a specific embodiment thereof will now be described by way of example and with reference to the accompanying drawings, in which:

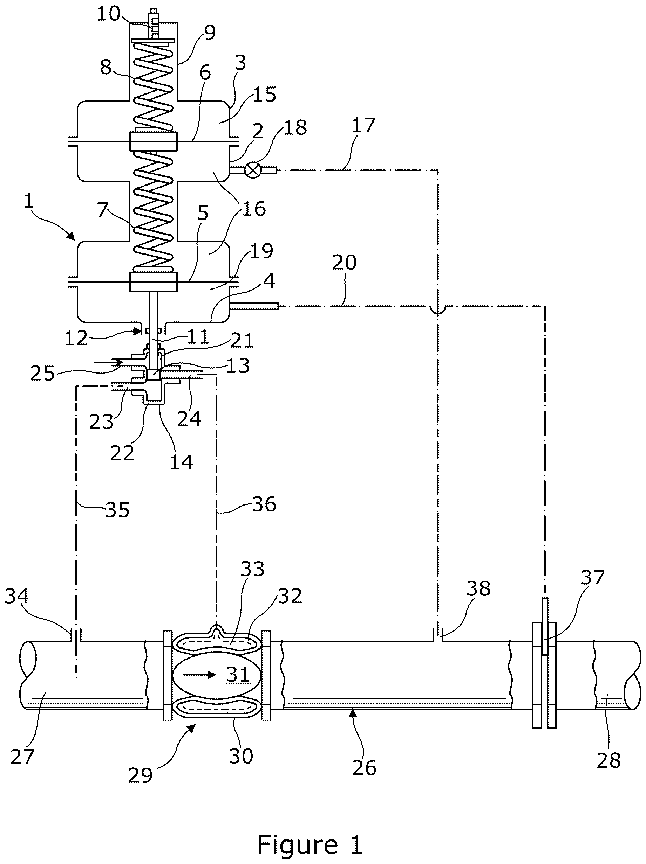

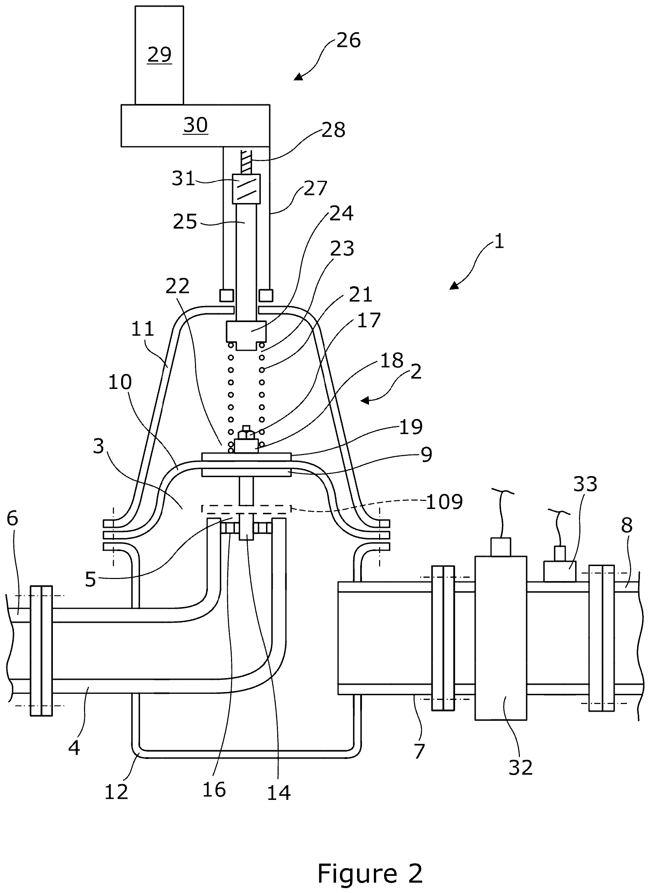

Figure 1 is Figure 2 of prior proposal GB 2,176,316,
Figure 2 a diagrammatic, cross-sectional, side view of a pressure reducing valve apparatus of the invention,
Figure 3 is a similar on a smaller scale and including a controller and a line from a remote pressure sensor,
Figure 4 is a typical plot of pressure required to be applied in a network for constant remote pressure with varying demand flow and

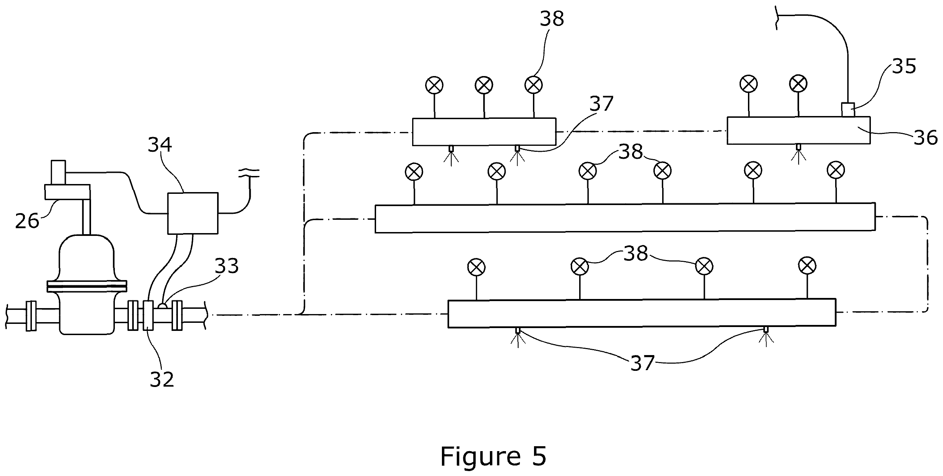

Figure 5 is a diagram of a water main having a pressure reducing valve apparatus of the invention and many customer supply taps and leaks.

Referring to the drawings, a spring loaded pressure reducing valve 1 has a body 2 containing a chamber 3. An inlet 4 opens into the chamber via an inlet orifice 5. The inlet is connected to an elevated pressure water main 6. An outlet 7 from the chamber is connected to a network 8 of pipes for local distribution of water to individual consumers. The regulator has a flow pressure regulation plate 9 arranged opposite the inlet orifice 5. A diaphragm 10 is fastened to the plate 9 and radiates from it to the body, forming a seal with upper and lower parts 11,12 of the body 2. Thus the chamber 3 is sealed between the upper and lower parts.

The regulation plate has a guide rod 14 extending down from it into a guide 16 in the inlet orifice 5. The rod extends through both the regulation plate and the diaphragm. At its top end it carries a nut 17 bearing on a spring centring washer 18 and a diaphragm sealing and clamping plate 19. The arrangement keeps the regulation plate centred over the inlet orifice 5.

In a variant, a separate regulation plate 109 opposite the orifice is provided on the lower rod 14. The diaphragm keeps the plate 9 / 109 centred over the orifice 5.

A compression spring 21 acts at its lower end 22 on the top of the clamping plate 19. The spring is kept compressed to a greater or lesser extent as explained below. Thus, it stays located around the centring washer 18. Its upper end 23 abuts a spring drive member 24 at the end of a drive tube 25 of a servo device 26. The drive tube is housed in a fixed tube 27 of the servo device, fast with the upper part 11 of the regulator body 2. Remote from the spring a lead screw 28 is journalled for axial alignment in the drive tube within the fixed tube. A motor 29 and gearbox 30 is arranged to the drive the lead screw. A nut 31, preferably a recirculating ball nut, is fast with the remote end of the drive tube 25, with the latter keyed to the fixed tube against rotation. Thus, the spring drive member can be advanced to further compress the spring or retracted to relieve compression, by respective rotation of the motor and the lead screw.

Downstream from the outlet 7, the pipework 8 of the local distribution network extends. In it adjacent the outlet is a flow meter 32 and a pressure sensor 33. These are electronically connected to a controller 34. Also connected to the controller is a remote pressure sensor 35 at the furthest point 36 of the pipework 8.

Along the pipework, there are various leaks 37, which increase in their flow rate with pressure and a number of user taps 38 etc. It is these which are the primary determinant of the flow at the pressure regulator 1. If it were of the type permanently set to a pressure maintaining sufficient pressure at the furthest point 36 in the network, the pressure would be such as to aggravate the leaks 37 regardless of the user flow at the taps 38.

In this embodiment of the invention, the entire pressure reducing valve apparatus includes not only the pressure reducing valve 1 and the flow meter 32, but also the controller 38 for controlling the regulator, via the servo motor, in accordance with flow measured by the flow regulator and indeed the remote pressure sensor 35, which is not strictly necessary for the invention.

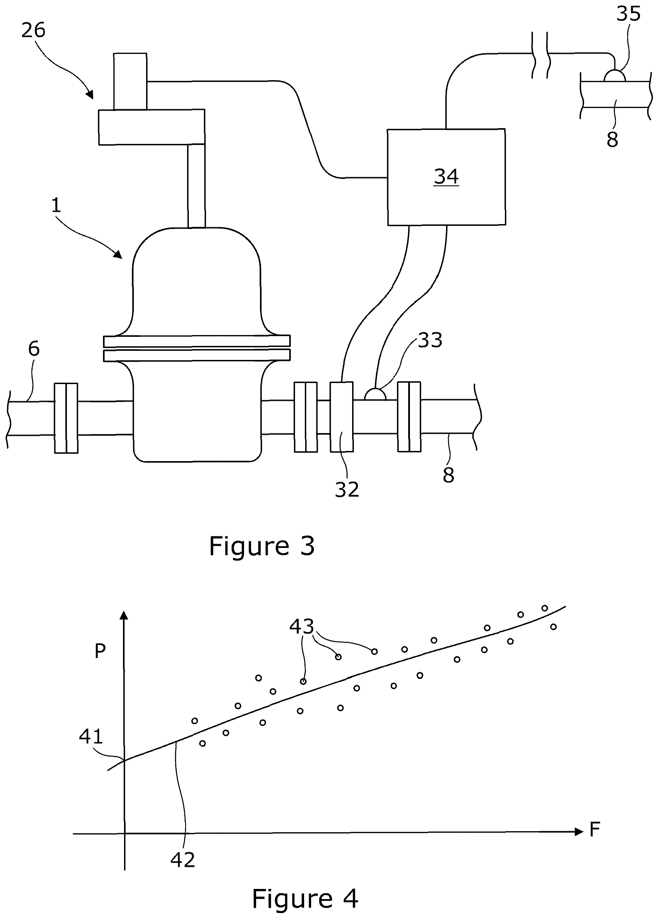

Many local distribution networks such as the network 8 have been previously measured and exhibit a pressure / flow characteristic as shown in Figure 4 when the pressure reducing valve is set to provide the required furthest point pressure for varying flows. The ideal low pressure point 41 for zero flow seldom exists due to leaks. The practical low pressure point 42 can be measured at night when user demand is negligible. Other flow and pressure readings 43 can be made during periods of more and less usage by adjusting the regulator to provide the sufficient furthest point pressure.

In practice, the pressure flow plot is a substantially straight line with a slope or gradient and an offset equivalent to the zero flow offset. The plot can be represented by the equation: Pressure required at regulator = Zero flow pressure + measured flow x plot gradient (in terms of pressure per unit flow).

This is surprising, because it might be expected that adjustment of the regulator would alter the measured flow. However, this is a second order effect because the primary determinant of flow is user usage. The leak flow is small by comparison and kept lower than it might be, by keeping the pressure in the network lower than it would be, if were set to its value to ensure that its furthest point sufficiency at maximum flow. This value results in too much flow and too much leakage at all other flows.

The spring 21 in the pressure reducing valve acts against the force exerted by the diaphragm 10, which is subject to the pressure to be regulated, the upstream pressure force exerted against the regulation plate 9 being substantially constant and being small in comparison with the diaphragm force. Thus, shortening of the spring by an amount proportional to the change in pressure required can provide this change, bearing in mind that only a small movement of the regulation plate is required for a significant change in pressure drop at the orifice of the outlet. Thus, for practical purposes, linear movement of the end of the spring acted on by the servo motor causes a linear change in regulated pressure. Accordingly, the controller can be set up to move the spring end linearly in accordance with the flow.

If the zero flow pressure and the gradient of the measured flow plot are not known, the controller can be set up to adjust the regulated pressure periodically for different flows to establish the pressures required to achieve the sufficient furthest away point pressure. For this connection is made with the remote pressure sensor 35 and the near pressure sensor 33, suitably wirelessly in the former case.

The controller can be provided with a memory adapted to record a map of pressure and flow as opposed to memorising merely the offset and gradient and use this as a look-up table for the pressure to which it should regulate the downstream pressure as a function of measured flow.

The sensor 33 can be used to fine tune the servo motor control to achieve the desired pressure in accordance with measured flow.

## Claims

1. A fluid pressure reducing valve apparatus comprising:
• a spring loaded pressure reducing valve (1) having:
• a body (2) containing a chamber (3),
• a liquid supply orifice (5) into the chamber (3) and a liquid outlet (7) from the chamber (3),
• a regulation plate (9, 109) opposed to the orifice (5) and subject in use to supply liquid acting on it,
• a spring (21) acting to urge the plate (9, 109) towards to the orifice (5);
• a diaphragm (10) between the regulation plate (9, 109) and the body (2) to close the chamber (3) between them and subject in use to regulated pressure in the chamber (3); and
• a flow meter (32) downstream of the outlet (7) for measuring the flow rate through the liquid outlet (7);
wherein the apparatus further comprises:
• a controllable motor drive (24, 25) acting between the body (2) and an end (23) of the spring (21) remote from the regulation plate (9, 109), and
• a controller (34) arranged to receive flow data from the flow meter (32) and to control the controllable motor drive (24, 25) for withdrawal of the remote end of the spring (21) in accordance with flow rate measured by the flow meter (32);
the arrangement being such that in use for increase in demand flow, the regulation plate (9, 109) is partially withdrawn to maintain downstream pressure on such increase and vice versa.

2. A fluid pressure reducing valve apparatus as claimed in claim 1, wherein the apparatus is adapted for reducing the pressure of water.

3. A fluid pressure reducing valve apparatus as claimed in claim 1, wherein the apparatus is adapted for reducing the pressure of hydrocarbons fluids both liquid and gaseous.

4. A fluid pressure reducing valve apparatus as claimed in claim 1, claim 2 or claim 3, wherein the controllable motor drive (24, 25) is a servo motor drive.

5. A fluid pressure reducing valve apparatus as claimed in claim 4, wherein the controller (34) is adapted for calculation of the servo motor action in spring positioning in accordance with a substantially linear downstream pressure and flow rate relationship.

6. A fluid pressure reducing valve apparatus as claimed in claim 5, wherein the calculation is based on pressure to be achieved in terms of servo positioning of the spring (21).

7. A fluid pressure reducing valve apparatus as claimed in claim 5, wherein the calculation is based on servo positioning of the spring (21) alone.

8. A fluid pressure reducing valve apparatus as claimed in claim 5, wherein the calculation is based on a lookup table of downstream pressure and flow rate.

9. A fluid pressure reducing valve apparatus as claimed in claim 8, wherein the lookup table includes (a) values of pressure to be achieved; or (b) spring positions in terms of servo revolutions.

10. A fluid pressure reducing valve apparatus as claimed in any preceding claim, wherein the regulation plate (9) is provided in abutment with a central region of the diaphragm, with a guide rod (14) extending into a centring guide (16) in the orifice (5).

11. A fluid pressure reducing valve apparatus as claimed in any one of claims 1 to 9, wherein the regulation plate (109) is provided spaced from the diaphragm (10), on a guide rod 14) extending from the diaphragm (10) into a centring guide (16) in the orifice (5).

12. A fluid pressure reducing valve apparatus as claimed in any preceding claim, wherein the spring (21) is a compression spring acting on the side of the diaphragm (10) remote from the orifice (5).

13. A fluid pressure reducing valve apparatus as claimed in any one of claims 1 to 11, wherein the spring is a tension spring acting on the side of the diaphragm (10) near to the orifice (5).

14. A fluid pressure reducing valve apparatus as claimed in any preceding claim, wherein the controllable motor drive (24, 25) includes a nut and lead screw device (28, 31) arranged to act on the spring (21) at an end remote from the diaphragm (10) and actuatable by a motor (29) of the drive.

15. A fluid pressure reducing valve apparatus as claimed in any preceding claim in combination with a remote pressure sensor (35) for measuring downstream pressure to be maintained.

## Patentansprüche

1. Fluiddruckminderungsventilvorrichtung, umfassend:
• ein federbelastetes Druckminderungsventil (1) mit:
• einem Körper (2), der eine Kammer (3) enthält,
• einer Flüssigkeitszufuhröffnung (5) in die Kammer (3) und einem Flüssigkeitsauslass (7) aus der Kammer (3),
• einer Regelplatte (9, 109), die der Öffnung (5) gegenüberliegt und im Gebrauch einer auf sie einwirkenden Zufuhrflüssigkeit ausgesetzt ist,
• einer Feder (21), die so wirkt, dass sie die Platte (9, 109) in Richtung der Öffnung (5) drückt;
• einer Membran (10) zwischen der Regelplatte (9, 109) und dem Körper (2), um die Kammer (3) zwischen ihnen zu verschließen und die im Gebrauch einem geregelten Druck in der Kammer (3) ausgesetzt ist; und
• einem Durchflussmesser (32) stromabwärts des Auslasses (7) zum Messen der Durchflussrate durch den Flüssigkeitsauslass (7);
wobei die Vorrichtung ferner umfasst:
• einen steuerbaren Motorantrieb (24, 25), der zwischen dem Körper (2) und einem von der Regelplatte (9, 109) entfernten Ende (23) der Feder (21) wirkt, und
• ein Steuergerät (34), das dazu angeordnet ist, Durchflussdaten vom Durchflussmesser (32) zu empfangen und den steuerbaren Motorantrieb (24, 25) zum Zurückziehen des entfernten Endes der Feder (21) entsprechend der vom Durchflussmesser (32) gemessenen Durchflussrate zu steuern;
wobei die Anordnung derart ist, dass im Gebrauch zur Bedarfsdurchflusserhöhung, die Regelplatte (9, 109) teilweise zurückgezogen wird, um den stromabwärtigen Druck bei einer solchen Erhöhung aufrechtzuerhalten und umgekehrt.

2. Fluiddruckminderungsventilvorrichtung nach Anspruch 1, wobei die Vorrichtung zur Minderung des Wasserdrucks angepasst ist.

3. Fluiddruckminderungsventilvorrichtung nach Anspruch 1, wobei die Vorrichtung zur Minderung des Drucks sowohl flüssiger als auch gasförmiger Kohlenwasserstoffluide angepasst ist.

4. Fluiddruckminderungsventilvorrichtung nach Anspruch 1, Anspruch 2 oder Anspruch 3, wobei der steuerbare Motorantrieb (24, 25) ein Servomotorantrieb ist.

5. Fluiddruckminderungsventilvorrichtung nach Anspruch 4, wobei das Steuergerät (34) zur Berechnung des Servomotorantrieb bei der Federpositionierung entsprechend einer im Wesentlichen linearen Beziehung zwischen stromabwärtigem Druck und Durchflussrate angepasst ist.

6. Fluiddruckminderungsventilvorrichtung nach Anspruch 5, wobei die Berechnung auf dem hinsichtlich der Servopositionierung der Feder (21) zu erreichenden Druck basiert.

7. Fluiddruckminderungsventilvorrichtung nach Anspruch 5, bei der die Berechnung ausschließlich auf der Servopositionierung der Feder (21) basiert.

8. Fluiddruckminderungsventilvorrichtung nach Anspruch 5, wobei die Berechnung auf einer Nachschlagetabelle für stromabwärtigen Druck und Durchflussrate basiert.

9. Fluiddruckminderungsventilvorrichtung nach Anspruch 8, wobei die Nachschlagetabelle (a) Werte des zu erreichenden Drucks; oder (b) Federpositionen hinsichtlich Servoumdrehungen beinhaltet.

10. Fluiddruckminderungsventilvorrichtung nach einem der vorhergehenden Ansprüche, wobei die Regelplatte (9) in Anlage mit einem Mittelbereich der Membran vorgesehen ist, wobei eine Führungsstange (14) in eine Zentrierführung (16) in der Öffnung (5) hineinragt.

11. Fluiddruckminderungsventilvorrichtung nach einem der Ansprüche 1 bis 9, wobei die Regelplatte (109) mit Abstand von der Membran (10) auf einer Führungsstange (14) vorgesehen ist, die von der Membran (10) in eine Zentrierführung (16) in der Öffnung (5) hineinragt.

12. Fluiddruckminderungsventilvorrichtung nach einem der vorhergehenden Ansprüche, wobei die Feder (21) eine Druckfeder ist, die auf die von der Öffnung (5) entfernte Seite der Membran (10) einwirkt.

13. Fluiddruckminderungsventilvorrichtung nach einem der Ansprüche 1 bis 11, wobei die Feder eine Zugfeder ist, die auf die nahe der Öffnung (5) befindlichen Seite der Membran (10) einwirkt.

14. Fluiddruckminderungsventilvorrichtung nach einem der vorhergehenden Ansprüche, wobei der steuerbare Motorantrieb (24, 25) eine Mutter- und Leitspindeleinrichtung (28, 31) beinhaltet, die so angeordnet ist, dass sie auf die Feder (21) an einem von der Membran (10) entfernten Ende einwirkt, und durch einen Motor (29) des Antriebs betätigbar ist.

15. Fluiddruckminderungsventilvorrichtung nach einem der vorhergehenden Ansprüche in Kombination mit einem entfernten Drucksensor (35) zum Messen des aufrechtzuerhaltenden stomabwärtigen Drucks.

## Revendications

1. Appareil de soupape de réduction de pression de fluide comprenant :
• une soupape de réduction de pression à ressort (1) comportant :
• un corps (2) contenant une chambre (3),
• un orifice d'alimentation de liquide (5) dans la chambre (3) et une sortie de liquide (7) depuis la chambre (3),
• une plaque de régulation (9, 109) opposée à l'orifice (5) et soumise en utilisation à l'alimentation en liquide agissant sur elle,
• un ressort (21) agissant pour pousser la plaque (9, 109) vers l'orifice (5) ;
• un diaphragme (10) entre la plaque de régulation (9, 109) et le corps (2) pour fermer la chambre (3) entre eux et soumis en utilisation à une pression régulée dans la chambre (3) ; et
• un débitmètre (32) en aval de la sortie (7) pour mesurer le débit à travers la sortie de liquide (7) ;
dans lequel l'appareil comprend en outre :
• un entraînement par moteur commandable (24, 25) agissant entre le corps (2) et une extrémité (23) du ressort (21) éloignée de la plaque de régulation (9, 109), et
• un contrôleur (34) agencé pour recevoir des données de débit provenant du débitmètre (32) et pour commander l'entraînement par moteur commandable (24, 25) pour le retrait de l'extrémité éloignée du ressort (21) en fonction du débit mesuré par le débitmètre (32) ;
l'agencement étant tel que lors de l'utilisation pour augmenter le débit de demande, la plaque de régulation (9, 109) est partiellement retirée pour maintenir la pression en aval lors d'une telle augmentation et vice versa.

2. Appareil de soupape de réduction de pression de fluide selon la revendication 1, dans lequel l'appareil est adapté pour réduire la pression de l'eau.

3. Appareil de soupape de réduction de pression de fluide selon la revendication 1, dans lequel l'appareil est adapté pour réduire la pression des fluides hydrocarbonés à la fois liquides et gazeux.

4. Appareil de soupape de réduction de pression de fluide selon la revendication 1, la revendication 2 ou la revendication 3, dans lequel l'entraînement par moteur commandable (24, 25) est un entraînement par servomoteur.

5. Appareil de soupape de réduction de pression de fluide selon la revendication 4, dans lequel le contrôleur (34) est adapté pour calculer l'action du servomoteur dans le positionnement du ressort conformément à une relation de pression et de débit en aval sensiblement linéaire.

6. Appareil de soupape de réduction de pression de fluide selon la revendication 5, dans lequel le calcul est basé sur la pression à atteindre en termes de positionnement asservi du ressort (21).

7. Appareil de soupape de réduction de pression de fluide selon la revendication 5, dans lequel le calcul est basé sur le positionnement asservi du ressort (21) seul.

8. Appareil de soupape de réduction de pression de fluide selon la revendication 5, dans lequel le calcul est basé sur une table de consultation de pression et de débit en aval.

9. Appareil de soupape de réduction de pression de fluide selon la revendication 8, dans lequel la table de consultation comprend (a) des valeurs de pression à atteindre ; ou (b) des positions de ressort en termes de tours asservis.

10. Appareil de soupape de réduction de pression de fluide selon l'une quelconque des revendications précédentes, dans lequel la plaque de régulation (9) est prévue en butée contre une région centrale du diaphragme, avec une tige de guidage (14) s'étendant dans un guide de centrage (16) dans l'orifice (5).

11. Appareil de soupape de réduction de pression de fluide selon l'une quelconque des revendications 1 à 9, dans lequel la plaque de régulation (109) est prévue espacée du diaphragme (10), sur une tige de guidage 14) s'étendant du diaphragme (10) dans un guide de centrage (16) dans l'orifice (5).

12. Appareil de soupape de réduction de pression de fluide selon l'une quelconque des revendications précédentes, dans lequel le ressort (21) est un ressort de compression agissant sur le côté du diaphragme (10) à distance de l'orifice (5).

13. Appareil de soupape de réduction de pression de fluide selon l'une quelconque des revendications 1 à 11, dans lequel le ressort est un ressort de tension agissant sur le côté du diaphragme (10) à proximité de l'orifice (5).

14. Appareil de soupape de réduction de pression de fluide selon l'une quelconque des revendications précédentes, dans lequel l'entraînement par moteur commandable (24, 25) comprend un dispositif à écrou et à vis mère (28, 31) agencé pour agir sur le ressort (21) à une extrémité à distance du diaphragme (10) et actionnable par un moteur (29) de l'entraînement.

15. Appareil de soupape de réduction de pression de fluide selon l'une quelconque des revendications précédentes, en combinaison avec un capteur de pression à distance (35) pour mesurer la pression en aval à maintenir.
